# EUROPÄISCHE PATENTSCHRIFT

(11) **EP 1 173 747 B1**
(45) Veröffentlichungstag und Bekanntmachung des Hinweises auf die Patenterteilung: **06.09.2006**
(21) Anmeldenummer: 00926901.0
(22) Anmeldetag: 13.04.2000
(51) Int. Cl.: G01N 21/25

(54) **ANORDNUNG ZUR OPTISCHEN AUSWERTUNG EINES GEGENSTANDSARRAYS**
ARRAY FOR OPTICAL EVALUATION OF AN OBJECT ARRAY
DISPOSITIF POUR L'EVALUATION OPTIQUE D'UN ENSEMBLE D'OBJETS

(30) Priorität: 27.04.1999 DE 19919092
(43) Veröffentlichungstag der Anmeldung: 23.01.2002
(73) Patentinhaber: CARL ZEISS JENA GmbH, 07745 Jena (DE)
(72) Erfinder: SCHMIDT, Stefan, D-24159 Kiel (DE)
(74) Vertreter: Geyer, Fehners & Partner
(86) Internationale Anmeldenummer: PCT/EP2000/003306
(87) Internationale Veröffentlichungsnummer: WO 2000/065325

(56) Entgegenhaltungen:
- WO-A-96/23213
- WO-A-97/34171
- WO-A-98/30889
- DE-A- 19 624 421
- DE-A- 19 725 050
- US-A- 4 892 409
- US-A- 5 112 134
- BOGDANOV VALERY ET AL: "Parallel, confocal, and complete spectrum imager for fluorescent detection of high-density microarray" PROCEEDINGS OF THE 1999 THREE-DIMENSIONAL AND MULTIDIMENSIONAL MICROSCOPY: IMAGE ACQUISITION AND PROCESSING VI;SAN JOSE, CA, USA JAN 24-JAN 25 1999, Bd. 3605, 1999, Seiten 298-307, XP000917120 Proc SPIE Int Soc Opt Eng;Proceedings of SPIE - The International Society for Optical Engineering 1999 Society of Photo-Optical Instrumentation Engineers, Bellingham, WA, USA

## Beschreibung

Die Erfindung bezicht sich auf eine Vorrichtung gemäß dem Oberbegriff des Anspruchs 1, wie sie z.B. aus V. Bogdanov, M. Boyce-Jacino, "Parallel, confocal, and complete spectrum imager for flourescent detection of high-density microarray", Proceedings of the 1999. Three-Dimensional and Multidimenstional Microscopy: Image Acquisition and Processing VI; San Jose, CA, USA, jan 24-Jan 25, 1999, bekannt ist.

Die Erfindung ist gekennzeichnet durch die Merkmale des Anspruchs 1.

Es zeigen:

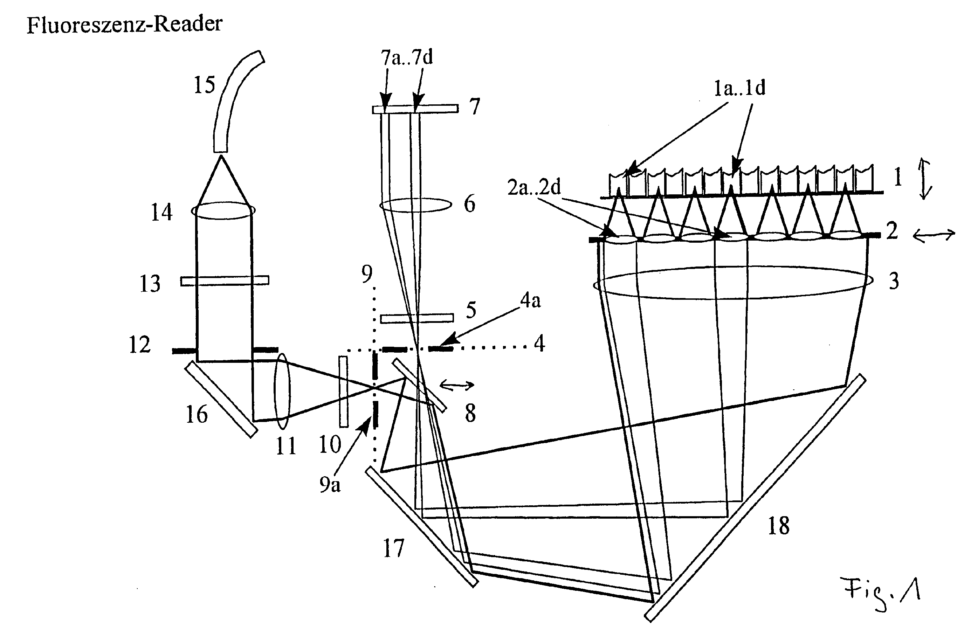

Fig. 1: Den vollständigen Strahlengang, beispielsweise bei der Fluoreszenzmessung

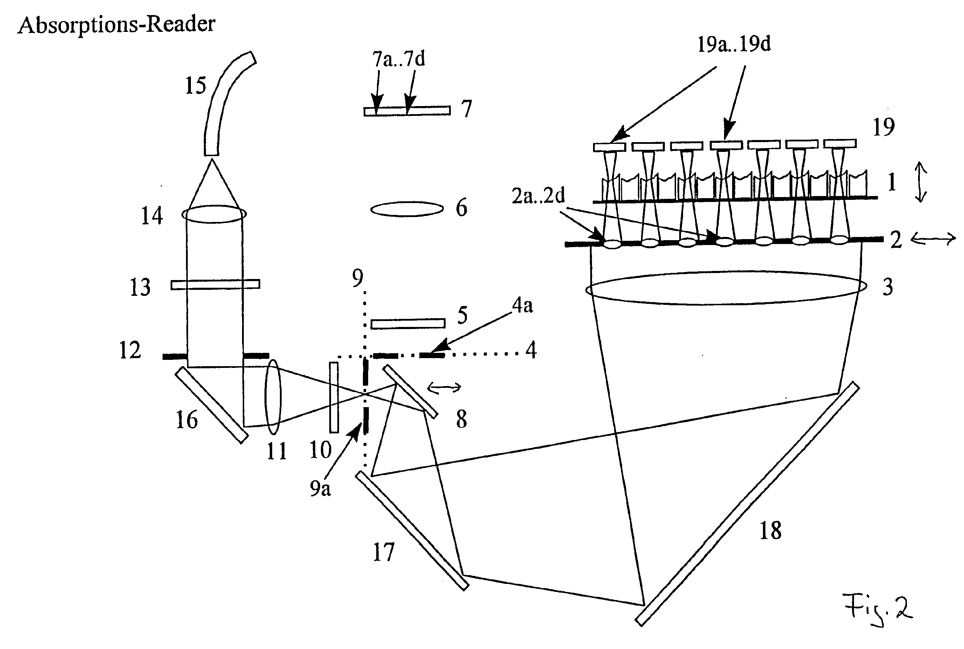

Fig.2 : Den Strahlengang bei der Absorptionsmessung

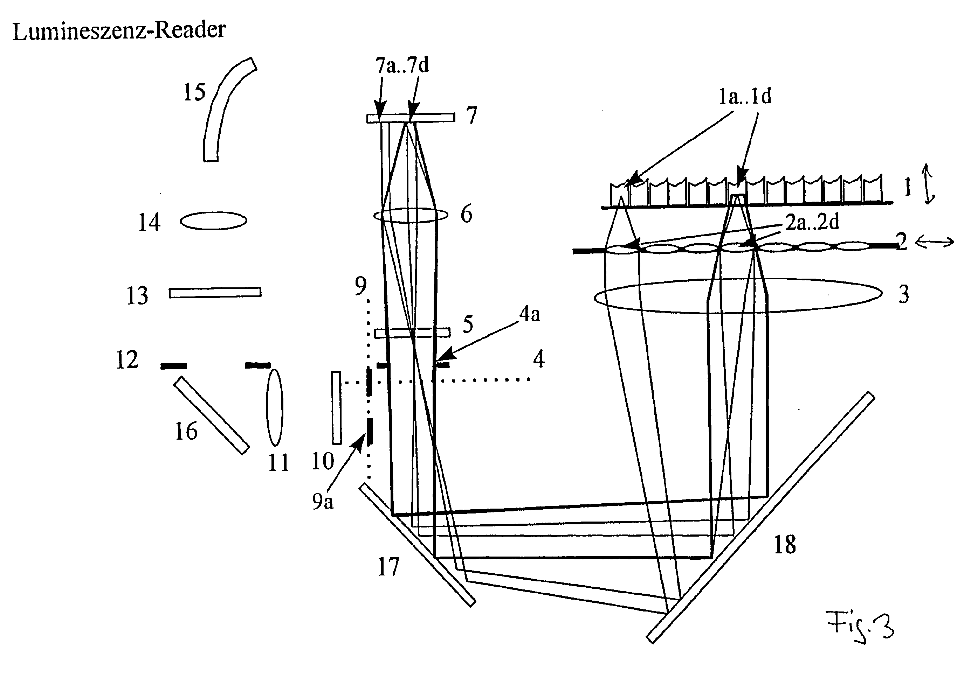

Fig.3 : Den Strahlengang bei der Luminsetzenzmessung

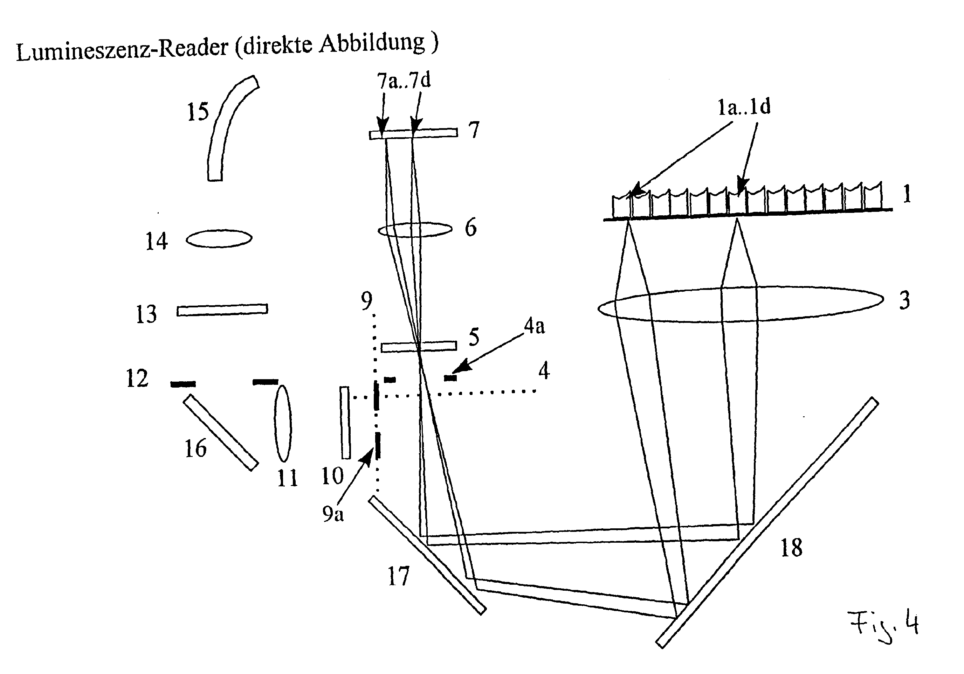

Fig.4 : Den Strahlengang ohne MLA

### Beschreibung des Strahlengangs

Der optische Aufbau des ist in drei wesenliche Bestandteile gegliedert..
1. Ein Minilinsen-Array (MLA). (2) zur Fokusierung von Licht in kleine Bereiche (Probvolumen) der mit Probensubstanz gefüllten Näpfe (1a-1d) einer Mikrotiterplatte (MTP) (1). Das MLA (2) dient auch dem Sammeln von aus dem Probvolumen emittiertem Licht im Falle von Fluoreszenz:- oder Lumineszenz-Anwendungen.
2. Einer Teleskop-Anordnung der Linsen 3,11 und eines Kollimators (14) zur Beleuchtung des Minilinsenarrays 2. Als Lichtquelle kann der Ausgang eines Lichtleiter dienen, wie in der Zeichnung dargestellt die Lampe selbst..
3. Einer Feldlinse (3) und eines Objektivs (6) zur telezentrischen Abbildung der Pupillen des MLA (2) auf einen CCD-Array-Detektor (7).

Das Minilinsen-Array besteht aus einer regelmäßigen Anordnung kleiner Linsen oder Objektive. Vorzugsweise ist die Anordnung der Minilinsen ein rechtwinkeliges Raster. In jedem Fall ist die Anordnung der Minilinsen der Geometrie des Probenbehälter-Array bzw. der MTP angepaßt.

Die dem MLA (2) zugewandte Frontlinse (3) des Teleskops für die Beleuchtung dient gleichzeitig als Feldlinse der telezentrischen Abbildung der MLA-Pupillen.

### 1. Der Anregungs-Strahlengang

Das aus dem Lichtleiter (15) austretende Licht wird durch einen Kollimator (14) gesammelt. Der Kollimator (14) bildet zusammen mit der kleinen, kurzbrennweitigen Teleskoplinse (11) den Lichtleiterausgang auf die Zwischenbildebene (9) des Teleskops 3,11 ab. Die große, langbrennweitige Teleskoplinse (3) nimmt das Licht aus der Zwischenbildebene (9) auf und überführt es in ein Bündel geringer Divergenz, mit dem das MLA (2) von seiner probenabgewandten Seite her beleuchtet wird. Jede einzelne Linse (2a..2d) des MLA (2) fokussiert das Licht dann in einen ihr zugeordneten Napf (1a..1d) der Mikrotiterplatte (1).

Zwischen dem Kollimator (14) und der kleinen Teleskoplinse (11) befindet sich die Aperturblende (12) des Beleuchtungsteleskops und Abschwächungsfilter (13). Die Aperturblende (12) definiert die Form des Strahlquerschnitts und hält überflüssiges Licht aus dem Strahlengang fern. Das dient der Verminderung von Signalübersprechen und einer Verringerung des Streulichtuntergrundes im Nachweis-Strahlengang. Die Aperturblende (12) befindet sich in einer Ebene, die zur Ebene der Minilinsenpupillen konjugiert ist.. Die Aperturblende (12) bildet also verkleinert den äußeren

Umriß des MLA (2) nach. Die Aperturblende kann zur besseren Streulichtunterdrückung auch als Lochblenden-Array ausgeführt werden.

In der Zwischenbildebene (9) befindet sich die Feldblende (9a) des Beleuchtungsteleskops. Die Zwischenbildebene (9) wird durch die große Teleskoplinse (3) und die Linsen (2a..2d) des MLA (2) in die Näpfe (1a..1d) der MTP (1) abgebildet. Die Feldblende (9a) definiert also den Bündelquerschnit des Lichtes innerhalb der Näpfe (1a..1d).

Der Anregungsfilter (10) dient dazu den Spektralbereich der Beleuchtung zu definieren.

Über den Spiegel (8) wird das von den Proben kommende Licht in den auch für die Detektion verwendeten Strahlengang eingespiegelt.

Durch die Anordnung des Spiegels 8 vor dem Objektiv 6 kann auf einfache Weise ein anderer Beleucghtungsmodus gewählt werden.

Wird das Gerät zur Floureszenz-Analyse eingesetzt, ist der Spiegel (8) als dichroitischer Strahlteiler ausgeführt. Der Spekrtralbereich des anregenden Lichts wird reflektiert, der zu detektierende Spektralbereich dagegen transmitiert. Dient das Gerät zur Detektion von Lumineszenz, kann die Einspiegelung durch Spiegel 8 und damit die Beleuchtung entfallen und der Strahlengang umfaßt nur noch den Nachweisstrahlengang, wie noch dargestellt wird.

### 2. Der Nachweis-Strahlengang

Das vom Probvolumen emittierte Licht wird durch die Minilinsen (2a..2d) kollimiert. Jedem Napf (1a..1d) der MTP (1) ist dabei eine Minilinse (2a..2d) zugeordnet. Das kollimierte Licht, das aus der Pupille der Minilinsen austritt, wird von der großen Teleskoplinse (3), die gleichzeitig als Feldlinse für die Pupillen-Abbildung dient, in die zur anregungsseitigen Zwischenbildebene (9) konjugierten Zwischenbildebene (4) fokusiert. In der Zwischenbildebene (4) sind also die Bilder der Probvolumina aus allen Näpfen (1a..1d) der MTP (1) überlagert. Die Blende (4a) definiert das beobachtete Probvolumen in jedem Napf. Vorzugsweise ist die Blende (4a) genauso groß wie die Feldblende (9a) der Beleuchtung.

Die Blende (4a) ist gleichzeitig die Aperturblende der Pupillenabbildung. Die Abbildung der Pupillen der Minilinsen (2a..2d) auf den CCD-Array-Detektor (7) erfolgt durch das Objektiv (6).

Der Emissionsfilter (5) dient dazu den nachgewiesenen Spektralbereich zu definieren.

Die Umlenkspiegel (16,17,18) dienen dazu den Strahlengang in eine kompakte Form zu bringen. Hierbei ist eine Mehrfachfaltung durch mehrere Spiegel dankbar.

### Beschreibung der Meßmodi

Grundsätzlich lassen sich verschiedene Meßmethoden auf die in der MTP befindlichen Proben anwenden. Auf der Basis des oben beschriebenen Strahlengangs können die Messungen einer Methode in mehreren Näpfen parallel durchgeführt werden. Bisher sind folgende Meßmethoden in Betracht gezogen worden:
1. Absorption
2. Fluoreszenz
3. Lumineszenz
4. Zeitaufgelöste Fluoreszenz-Detektion
5. Polarisations abhängige Fluoreszenz (Absorption???)

### Absorption

Bei Absorptionsmessungen kommt nur der Anregungsstrahlengang zur Anwendung.

Der Strahlteiler 8 kann gegen einen Vollspiegel ausgetauscht werden.

Die Detektion des durch die Probe transmitierten Lichts erfolgt durch ein

Photodioden-Array (19), das so dicht als möglich den Probenbehältern nachgeordnet ist..

Durch den oben beschriebenen Strahlengang wird die probenabgewandte Seite des MLA homogen beleuchtet, so daß jeder Napf mit der gleichen Intensität durchstrahlt wird. Das MLA ist für Absorptionszwecke so auszulegen, daß die Begrenzungen der Näpfe die durch die Minilinsen geformten Strahlbündel nicht beschneiden und das jedes Strahlbündel vollständig auf die ihm zugeordnete Empfängerfläche (19a..19d) des Photodioden-Arrays fällt.

Das bedeutet , daß für bestimmte MTP oder Probenbehälter auswechselbare MLA und Feldblenden 9a vorgesehen sein können, die bezüglich der Brennweiten und Krümmungsradien optimiert sind.

### Fluoreszenz

Bei Fluoreszenzmessungen erfolgt die Anregung in der gleichen Weise wie im Falle von Absorptionsmessungen. Der Spiegel (8) wird aber durch einen dichroitischen Strahlteiler mit hoher Transmission für das von der Probe emittierte Licht ersetzt.

Die Auslegung des MLA orientiert sich an der möglichst selektiven Anregung und dem Nachweis aus einem kleinen Volumen innerhalb des Napfes, d.h. eine hinreichende chromatische Korrektur ist mit einer hohen numerischen Apertur ( größer gleich 0.5) verbunden.

### Lumineszenz

Da die Probe selbstleuchtend ist kommt nur der Nachweis-Strahlengang zur Anwendung

Der Strahlteiler 8 kann ausgeschwenkt werden.

Es besteht allgemein und auch bei der Absorptionsmessung die Möglichkeit das MLA wegzulassen und eine direkte Abbildung des MTP-Bodens auf den CCD-Array-Detektor zu erzeugen. In diesem Fall kann die gesamte Platte auf einmal ausgelesen werden unabhängig davon wieviele Näpfe sie enthält. Das bedeutet zwar leichte Verluste an Sensitivität, jedoch können auch bei einer großen Anzahl von Kanälen alle Kanäle gleichzeitig ausgelesen werden.

### Zeitaufgelöste Fluoreszenz-Detektion

Bei der zeitaufgelösten Fluoreszenz kommt der gleiche Strahlengang zur Anwendung wie bei der Fluoreszenz.

Die Anregung erfolgt durch eine Lichtquelle, die in der Lage ist kurze Lichtpulse (ca. 1 ns) zu erzeugen, d.h. beispielsweise eine geeignete Blitzlampe.

Der verwendete Detektor muß in der Lage sein nach einer Verzögerung in der Größenordnung der Dauer des Anregungspulses eine Messung mit einer Integrationszeit in der gleichen Größenordnung im Takt der Bleuchtung durchzuführen.

Hierzu ist eine Mikrochannelplateverstärkte Kamera geeignet.

Gemessen wird die nach der Verzögerungszeit verbleibende Fluoreszenzintensität.

### Polarisationsabhängige Fluoreszenz

Voraussetzung ist eine polarisationserhaltende Optik. Gemessen wird die Fluoreszenzintensität mit der zum Anregungslicht orthogonalen Polarisationsrichtung.

Hierzu können vor den Filtern 5 und 10 vorzugsweise zueinander senkrecht polarisierte Polfilter vorgesehen sein.

## Patentansprüche

1. Vorrichtung zur optischen Auswertung eines Gegenstandsarrays (1), mit
- einem Detektorarray (7),
- einem dem Gegenstandsarray (1) in Richtung des Detektorarrays (7) vorgeordneten Minilinsenarray (2),
- einer dem Gegenstandsarray (1) in Richtung des Detektorarrays (7) vorgeordneten Feldlinse (3), **gekennzeichnet durch**
- ein Objektiv (6), das zusammen mit der Feldlinse (3) alle Pupillen des Minilinsenarrays (2) gleichzeitig auf das Detektorarray (7) abbitdet, und
- eine Lichtquelle (15), deren Strahlung über einen Strahlteiler (8) zwischen der Feldlinse (3) und dem Objektiv (6) eingekoppelt ist.

2. Vorrichtung nach Anspruch 1, bei der die Feldlinse (3) und eine weitere Linse (11) eine teleskopische Anordnung bilden, die das Gegenstandsarray (1) mit Licht der Lichtquelle (15) beleuchtet.

3. Vorrichtung nach einem der obigen Ansprüche, mit einer zwischen Feldlinse (3) und Objektiv (6) angeordneten Blende (4a), wobei der Strahlteiler (8) zwischen der Blende (4a) und der Feldlinse (3) liegt.

4. Vorrichtung nach einem der obigen Ansprüche, bei der die Feldlinse (3) und das Objektiv (6) eine telezentrische Abbildung der Pupillenebehe des Minilinsenarrays (2) auf das Detektorarrays (7) bewirken.

5. Vorrichtung nach einem der obigen Ansprüche, bei der zwischen der Feldlinse (3) und der Blende (4a) ein oder mehrere Umtenkelemente (17, 18) zur Faltung des Strahlenganges für Beleuchtung und/oder Detektion vorgesehen sind.

6. Vorrichtung nach einem der obigen Ansprüche, bei der das Gegenstandsarray (1) mindestens vertikal zur Beleuchtungsachse verschiebbar ist.

7. Vorrichtung nach einem der obigen Ansprüche, bei der zur zeitaufgelösten Fluoreszenzmessung die Lichtquelle (15) intermittierend schaltbar und eine zum Beleuchtungstakt synchronisierte, vorzugsweise dazu zeitversetzte Detektion möglich ist.

8. Anordnung nach Anspruch 7, mit einer Blitzlampe als Lichtquelle (15).

9. Vorrichtung nach einem der obigen Ansprüche, bei der das Minilinsenarray (2) zur Beobachtung des vollständigen Gegenstandsarrays (1) aus dem Strahlengang ausschwenkbar und/oder zur Anpassung an unterschiedliche Meßausgaben austauschbar ist.

10. Vorrichtung nach einem der obigen Ansprüche, bei der die Lichtquelle (15) zur Luminiszenzdetektion ausschaltbar und/oder ein die Strahlung der Lichtquelle (15) einkoppelndes Einkoppelelement (8) ausschwenkbar ist.

11. Vorrichtung nach einem der obigen Ansprüche, bei der für eine Absorptionsmessung dem Gegenstandsarray (1) in Beleuchtungsrichtung ein zweites Detektorarray nachgeordnet ist.

12. Verwendung einer Vorrichtung nach einem der obigen Ansprüche in einem Kombinationsgerät zur Messung mindestens eines der folgenden Effekte am Gegenstandsarray (1): Fluoreszenz, zeitaufgelöste Fluoreszenz, Lumineszenz und Absorption.

13. Verwendung einer Vorrichtung nach einem der Ansprüche 1 bis 11 als Reader für Mikrotiterplatten.

## Claims

1. Device for optical evaluation of an object array (1), comprising
- a detector array (7),
- a microlens array (2) preceding the object array (1), as viewed in the direction of the detector array (7),
- a field lens (3) preceding the object array (1), as viewed in the direction of the detector array (7), **characterised by**
- an objective (6) which, together with the field lens (3), simultaneously images all pupils of the microlens array (2) onto the detector array (7), and
- a light source (15), whose radiation is coupled in by means of a beam splitter (8) between the field lens (3) and the objective (6).

2. The device according to claim 1, wherein the field lens (3) and a further lens (11) form a telescopic arrangement which illuminates the object array (1) with light from the light source (15).

3. The device according to any of the preceding claims, comprising a stop (4a) disposed between the field lens (3) and the objective (6), wherein the beam splitter (8) is located between the stop (4a) and the field lens (3).

4. The device according to any of the preceding claims, wherein the field lens (3) and the objective (6) effect telecentric imaging of the pupil plane of the microlens array (2) onto the detector array (7).

5. The device according to any of the preceding claims, wherein one or more deflecting elements (17, 18) for folding the beam path of illumination and/or detection are provided between the field lens (3) and the stop (4a).

6. The device according to any of the preceding claims, wherein the object array (1) is shiftable at least vertically to the axis of illumination.

7. The device according to any of the preceding claims, wherein the light source (15) is intermittently switchable and a detection synchronized to the illumination clock, preferably a time-shifted detection, is possible so as to allow time-dependent fluorescence measurement.

8. The device according to claim 7, comprising a flash lamp as the light source (15).

9. The device according to any of the preceding claims, wherein the microlens array (2) can be swivelled out of the beam path for observing the entire object array (1) and/or can be exchanged for adapting to different measuring applications.

10. The device according to any of the preceding claims, wherein the light source (15) can be switched off for luminescence detection and/or a coupling element (8) for coupling-in of the radiation from the light source (15) can be swivelled out.

11. The device according to any of the preceding claims, wherein, for absorption measurement, a second detector array is disposed following the object array (1) in the illumination direction.

12. The use of a device according to any of the preceding claims in a combined device for measuring at least one of the following phenomena on the object array (1): fluorescence, time-dependent fluorescence, luminescence, and absorption.

13. The use of an arrangement according to any of the claims 1 to 11 as a reader for microtiter plates.

## Revendications

1. Dispositif pour l'évaluation optique d'un ensemble objet (1), avec
- un ensemble détecteur (7),
- un ensemble de minilentilles (2) disposé en amont de l'ensemble objet (1) en direction de l'ensemble détecteur (7),
- une lentille de champ (3) disposée en amont de l'ensemble objet (1) en direction de l'ensemble détecteur (7), **caractérisé par**
- un objectif (6), qui reproduit conjointement avec la lentille de champ (3) toutes les pupilles de l'ensemble de minilentilles (2) simultanément sur l'ensemble détecteur (7), et
- une source lumineuse (15), dont le rayonnement est injecté au moyen d'un séparateur de faisceau (8) entre la lentille de champ (3) et l'objectif (6).

2. Dispositif selon la revendication 1, sur lequel la lentille de champ (3) et une autre lentille (11) forment un dispositif télescopique, qui éclaire l'ensemble objet (1) avec la lumière de la source lumineuse (15).

3. Dispositif selon l'une quelconque des revendications précédentes, avec un obturateur (4a) disposé entre la lentille de champ (3) et l'objectif (6), le séparateur de faisceau (8) étant disposé entre l'obturateur (4a) et la lentille de champ (3).

4. Dispositif selon l'une quelconque des revendications précédentes, sur lequel la lentille de champ (3) et l'objectif (6) effectuent une reproduction télécentrique du plan de pupille de l'ensemble de minilentilles (2) sur l'ensemble détecteur (7).

5. Dispositif selon l'une quelconque des revendications précédentes, sur lequel il est prévu entre la lentille de champ (3) et l'obturateur (4a) un ou plusieurs éléments de déviation (17, 18) pour la convolution de la trajectoire du faisceau pour l'éclairage et/ou pour la détection.

6. Dispositif selon l'une quelconque des revendications précédentes, sur lequel l'ensemble objet (1) peut coulisser au moins verticalement par rapport à l'axe d'éclairage.

7. Dispositif selon l'une quelconque des revendications précédentes, sur lequel, pour la mesure de fluorescence avec résolution dans le temps, la source lumineuse (15) peut être commutée par intermittence et une détection synchronisée par rapport au cycle d'éclairage, de préférence décalée dans le temps par rapport à cette opération, est possible.

8. Dispositif selon la revendication 7, avec un flash comme source lumineuse (15).

9. Dispositif selon l'une quelconque des revendications précédentes, sur lequel l'ensemble de minilentilles (2) peut être basculé vers l'extérieur à partir de la trajectoire du faisceau pour l'observation de l'ensemble objet (1) complet et/ou peut être remplacé pour l'adaptation à différentes sorties de mesure.

10. Dispositif selon l'une quelconque des revendications précédentes, sur lequel la source lumineuse (15) peut être déconnectée pour la détection de la luminescence et/ou un élément d'injection (8) injectant le rayonnement de la source lumineuse (15) peut être basculé vers l'extérieur.

11. Dispositif selon l'une quelconque des revendications précédentes, sur lequel un second ensemble détecteur est placé en aval de l'ensemble objet (1) pour une mesure d'absorption.

12. Utilisation d'un dispositif selon l'une quelconque des revendications précédentes dans un appareil mixte pour la mesure d'au moins l'un des effets suivants sur l'ensemble objet (1) : fluorescence, fluorescence avec résolution dans le temps, luminescence et absorption.

13. Utilisation d'un dispositif selon l'une quelconque des revendications 1 à 11 comme lecteur (reader) pour des plaques de microtitre.
